# EUROPEAN PATENT APPLICATION

(11) **EP 3 709 479 A1**
(43) Date of publication of application: **16.09.2020**
(21) Application number: 19162958.3
(22) Date of filing: 14.03.2019
(51) Int. Cl.: H02J 9/00, H02J 9/06, H02J 7/34, H02J 1/10

(54) **CONTROLLING HOLD-UP TIME IN POWER SUPPLY**

(71) Applicant: Nokia Solutions and Networks Oy, 02610 Espoo (FI)
(72) Inventor: MOILANEN, Jukka, 9191 Tupos (FI)
(74) Representative: Sayer, Robert David

(57) **Abstract**

An apparatus is discloses which comprises a means for providing a supply voltage to a primary load from a primary energy storage means, means for detecting an input supply voltage provided by a main power supply and means for causing charging of a secondary energy storage means from the main power supply through a secondary power supply if the input supply voltage is at or above a predetermined level, wherein the secondary power supply is configured to operate in a first mode of operation. There may also be provided a means for causing discharging of the secondary energy storage means through the secondary power supply into the primary energy storage if the input supply voltage is below the predetermined level, wherein the secondary power supply is configured to operate in a second mode of operation.

## Description

### Field

Example embodiments relate to methods and systems for controlling the hold-up time in a power supply.

### Background

Hold-up time is the length of time that a power supply unit (PSU) can operate in a regulated way, e.g. within a specified range, after failure or fluctuation of its input supply. For example, the hold-up time of a 10 volt DC PSU with +/- 10% regulation is the duration of the time between the input being removed and the output falling to 9 volts.

Equipment comprising components, such as processors, memories etc. may lose critical data if there is even a momentary loss of power. This may lead to critical failures in the functioning of the system unless the PSUs can cater for such power losses. In the telecommunications sector, PSUs may be used for all manner of communications systems. For example, a remote radio head (RRH) is a remote radio transceiver that may be used to extend the coverage of base stations in challenging environments. RRHs require a regulated PSU with appropriate hold-up time to cater for brief losses of power. Otherwise, there may be a loss of service, possibly requiring an engineer to travel to the site of the RRH to repair or replace it.

Embodiments herein are not limited to telecommunications systems.

### Summary

According to a first example embodiment, there is provided an apparatus comprising: means for providing a supply voltage to a primary load from a primary energy storage means; means for detecting an input supply voltage provided by a main power supply; means for causing charging of a secondary energy storage means from the main power supply through a secondary power supply if the input supply voltage is at or above a predetermined level, wherein the secondary power supply is configured to operate in a first mode of operation; and means for causing discharging of the secondary energy storage means through the secondary power supply into the primary energy storage if the input supply voltage is below the predetermined level, wherein the secondary power supply is configured to operate in a second mode of operation.

The secondary power supply may be a DC-DC power converter.

The direction of energy flow may be determined by a controlling means which, in the first mode of operation, directs energy in a first direction from the input to the output to charge the secondary energy storage means and, in the second mode of operation, directs energy in a second direction from the output to the input to cause discharge energy from the secondary energy storage means to charge the primary energy storage means.

The apparatus may further comprise a first switching means connected between the secondary energy storage means and a secondary load connected to an output of the secondary power supply, and further comprising controlling means configured, by control of the first switching means, to disconnect the secondary load from the secondary energy storage means when the input supply is below the predetermined level in the second mode of operation.

The apparatus may further comprise a second switching means connected between the main power supply and inputs of the voltage supply means to the primary load and the secondary power supply, and further comprising controlling means configured, by control of the switching means, to disconnect the main power supply from the first and second inputs means when the input supply is below the predetermined level in the second mode of operation.

The primary energy storage means may be connected directly to the main power supply.

The primary energy storage means may have greater storage capacity than the secondary energy storage means.

The primary energy storage means and the secondary energy storage means may comprise capacitors.

The apparatus may comprise a plurality of secondary, additional power supply means, each for connection to respective secondary loads, each second input being connected to the main power supply and the primary energy storage means and having respective secondary energy storage means connected between their outputs and a reference node, and further comprising controlling means configured to cause charging of each secondary energy storage means when the input voltage supply is at or above the predetermined level in the first mode of operation and to cause discharging, through the respective power supplies, into the first energy storage means, when the input supply is below the predetermined level in the second mode of operation.

The power supplies may be connected in parallel to one another.

According to a second example embodiment, there may be provided a method, comprising: providing a supply voltage to a primary load from a primary energy storage means; detecting an input supply voltage provided by a main power supply; causing charging of a secondary energy storage from the main power supply through a secondary power supply, if the input supply voltage is at or above a predetermined level, wherein the secondary power supply is configured to operate in a first mode of operation; and causing discharging of the secondary energy storage through the secondary power supply into the primary energy storage, if the input supply voltage is below the predetermined level, wherein the secondary power supply is configured to operate in a second mode of operation.

The secondary power supply may be a bi-directional DC-DC power converter, and the method comprises, in the first mode of operation, directing energy in a first direction from the input to the output to charge the secondary energy storage means and, in the second mode of operation, directing energy in a second direction from the output to the input to cause discharged energy from the secondary energy storage means to charge the primary energy storage means.

The method may further comprise controlling a first switching means between the secondary energy storage means and a secondary load to disconnect the secondary load from the secondary energy storage means when the input supply voltage is below the predetermined level in the second mode of operation.

The method may further comprise controlling a second switching means connected between the main power supply and inputs of the voltage supply means to the primary load and the secondary power supply, and further comprising controlling means for disconnecting the main power supply from the first and second inputs means when the input supply is below the predetermined level in the second mode of operation.

According to a third example embodiment, there may be provided a computer program product comprising at least one non-transitory computer-readable storage medium having computer-executable program code portions stored therein, the computer-executable program code portions comprising program code instructions for: providing a supply voltage to a primary load from a primary energy storage means; detecting an input supply voltage provided by a main power supply; causing charging of a secondary energy storage from the main power supply through a secondary power supply, if the input supply voltage is at or above a predetermined level, wherein the secondary power supply is configured to operate in a first mode of operation; and causing discharging of the secondary energy storage through the secondary power supply into the primary energy storage, if the input supply voltage is below the predetermined level, wherein the secondary power supply is configured to operate in a second mode of operation.

According to a fourth example embodiment, there may be provided a non-transitory computer readable medium comprising program instructions stored thereon for performing a method, comprising: providing a supply voltage to a primary load from a primary energy storage means; detecting an input supply voltage provided by a main power supply; causing charging of a secondary energy storage from the main power supply through a secondary power supply, if the input supply voltage is at or above a predetermined level, wherein the secondary power supply is configured to operate in a first mode of operation; and causing discharging of the secondary energy storage through the secondary power supply into the primary energy storage, if the input supply voltage is below the predetermined level, wherein the secondary power supply is configured to operate in a second mode of operation.

According to a fifth example embodiment, there may be provided an apparatus comprising: at least one processor; and at least one memory including computer program code which, when executed by the at least one processor, causes the apparatus: to provide a supply voltage to a primary load from a primary energy storage means; to detect an input supply voltage provided by a main power supply; to cause charging of a secondary energy storage from the main power supply through a secondary power supply, if the input supply voltage is at or above a predetermined level, wherein the secondary power supply is configured to operate in a first mode of operation; and to cause discharging of the secondary energy storage through the secondary power supply into the primary energy storage, if the input supply voltage is below the predetermined level, wherein the secondary power supply is configured to operate in a second mode of operation.

According to a sixth example embodiment, there may be provided a means for providing a primary, main DC power supply, to a first output, the primary means having a first input connectable to a DC input supply and to an associated primary energy storage means connected between the first input and a reference node, the first output of the primary means being for connection to a primary load; means for providing an secondary, additional DC power supply to a second output, the secondary means having a second input connected to the same DC input supply and to the primary energy storage means and having a secondary energy storage means connected between the output of the secondary power supply and a reference node, the secondary output being suitable for connection to a secondary load; and means for controlling charging and discharging of the secondary energy storage means, the controlling means causing charging of the secondary energy storage means through the secondary power supply when the input supply is at or above a predetermined level and causing discharging of the secondary energy storage means, through the second power supply, and into the first energy storage means, when the input supply is below the predetermined level.

According to a seventh example embodiment, there may be provided a method, comprising: controlling an apparatus comprising a primary DC power supply and a secondary DC power supply, in which the primary power supply has a first input connectable to a DC input supply and to an associated primary energy storage means connected between the first input and a reference node and a first output for connection to a primary load, and in which the secondary power supply has a second input connected to the same DC input supply and to the primary energy storage means and a secondary energy storage means connected between the output of the secondary power supply and the reference node, wherein the controlling comprises charging and discharging of the secondary energy storage means by charging of the secondary energy storage means through the secondary power supply when the input supply is at or above a predetermined level and discharging of the secondary energy storage means, through the second power supply, and into the primary energy storage means, when the input supply is below the predetermined level.

In the foregoing, any reference to "means" may refer to the means as comprising: analog circuitry, digital circuitry, a combination or analog and digital circuitry, and/or at least one processor, and at least one memory including computer program code, the at least one memory and computer program code configured to, with the at least one processor, cause the performance of the apparatus.

### Drawings

Example embodiments will now be described, by way of non-limiting example, with reference to the accompanying drawings, in which:
FIG. 1 is a schematic view of a communications mast, associated with a base station and power system, for which example embodiments may be usefully applied;
FIGS. 2A - 2B are schematic circuits indicating respective modes of operation for extending a hold-up time of a power supply in accordance with example embodiments;
FIG. 3 is a more detailed circuit for extending a hold-up time of a power supply in accordance with example embodiments;
FIG. 4 is a flow diagram indicating operations that may be performed by circuitry, logic and/or computer program code in accordance with example embodiments;
FIG. 5 is a more detailed flow diagram indicating operations that may be performed by circuitry, logic and/or computer program code in accordance with example embodiments;
FIG. 6 is a schematic block diagram of components of an apparatus that may perform the FIG. 4 and FIG. 5 operations; and
FIGS. 7A - 7B are non-transitory storage media for storing computer code that may perform the FIG. 4 and FIG. 5 operations.

### Detailed Description

Example embodiments relate to an apparatus and methods for controlling the hold-up time in a power supply unit (PSU). For example, some example embodiments relate to extending the hold-up time in a PSU.

In this context, a PSU may comprise one or more constituent power supplies, or sub PSUs, that may supply power to respective loads. For example, the overall PSU may be termed the PSU and the power supplies within the PSU may be sub-supplies or power converters, e.g. DC-DC converters.

A DC-DC converter is an electrical or electronic circuit that converts a source of direct current (DC), usually from one voltage to another voltage. There may be a supply of input DC power to one or more DC-DC converters, or input AC power that is first rectified, and the DC converter converts and regulates the output voltage to a level appropriate for its associated load. Sometimes, a PSU may comprise a plurality of sub PSUs, for example a plurality of DC-DC converters, each for suppling a respective regulated output voltage to a plurality of loads. The plurality of sub PSUs may be electrically in parallel. Sometimes, one or more of the sub PSUs may not be connected to a load or may not be used in respect of a connected load for a period of time. For example, a sub PSU may be connected to a non-critical load that gathers data very occasionally, or which gathers and stores data but transmits that data very occasionally. In other words, a non-critical load may be considered one that does not require a constant, regulated power source to perform its function correctly or for a critical purpose.

A load may mean any electrical or electronic component that requires power to perform a technical function.

Embodiments herein may involve utilising one converter, or primary converter, to supply power to a main load and another converter, or secondary converter, to be used in controlling the hold-up time for the power supplied to the main load. The secondary converter may or may not be connected to a secondary load. Where it is connected to a secondary load, use of the secondary converter in accordance with example embodiments, may be performed at a time when the secondary load is not being used for gathering, processing and/or transmitting data or signals.

Some PSUs are provided which contain multiple such power converters (sub PSUs) in parallel for connection to respective loads on-site. Therefore, adaption of such PSUs to operate in accordance with example embodiments is envisaged as an option, and this may involve providing additional functionality. Sometimes, PSUs may be provided with in-built processing functionality and/or electrically controlled switches, and hence embodiments herein may utilise such PSUs without requiring additional components. Sometimes, PSUs may be provided with output energy storage modules (e.g. capacitors) which may be utilised herein. Therefore, embodiments may make use of redundant components and circuitry already provided in such PSUs or systems which incorporate such PSU's.

Practical uses of PSUs according to example embodiments include any application that requires a regulated and known source of power notwithstanding the possibility of even short losses of the input supply. Such losses may be complete losses (zero input) or a drop below a level that results in the output power from one or more converters being below the required level(s). Where the effect of such a loss may affect the load or subsequent functionality, there needs to be a way of mitigating the problem. For example, equipment comprising digital components, such as processors, memories etc. may lose critical data if there is even a momentary loss of power. This can lead to critical failures in the functioning of the system unless the PSUs can cater for such power losses. In the telecommunications sector, PSUs may be used for all manner of communications systems. For example, a remote radio head (RRH) is a remote radio transceiver that may be used to extend the coverage of base stations in challenging environments. Example embodiments are not limited to such.

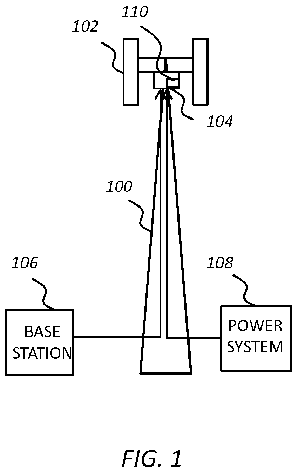

For example, FIG. 1 shows a telecommunications mast 100 on which is mounted one or more antennas 102, and further comprising at least one RRH 104 which is electrically connected to a base station 106 and power system 108 on the ground. The antennas 102, RRH 104 and base station 106 may be for any suitable radio technology, such as 3G, 4G, LTE, 5G or indeed any future radio technology. The RRH 104 provides a separation of signal and power components from the base station 106, which is on the ground, and the RRH sits close to the antennas 102.

Within the RRH 104 there may be a PSU 110 which receives an input supply voltage and current from the power system 108. The PSU 110 may comprise a plurality of sub-PSUs, e.g. DC-DC power converters, at least one of which is connected to, and supplies, power to critical components also housed in the RRH 104. The critical components may comprise one or more of RF circuitry, analog-to-digital converters (ADCs), digital-to-analog converters (DACs), RF up converters, RF downconverters, mixers, microprocessors and so on. One or more other sub PSUs may be redundant, or only used periodically, or may be used with non-critical modules.

For example, the PSU 110 may comprise a sub PSU for digital parts of the RRH 104, considered critical, and other sub PSUs may be for power amplifiers and so on. These sub PSUs may be located on the same printed wire board (PWB) but might be provided as separate units. A control means may also be provided in the RRH 104. Embodiments herein make use of these other sub PSUs to extend the hold-up time for the sub PSUs for the one or more critical components, thus mitigating and/or avoiding problems that may be caused if the power system 108 were to fail or drop in voltage, or indeed if the mains supply to the power system 108 were to fail or drop in voltage.

In some cases, if the power system 108 were to fail or drop, critical components such as digital parts of, e.g., radios, processors etc. may be configured to perform a controlled, fast shut-down procedure, including sending power down alerts to back-end systems, saving important data and /or log files in non-volatile memory. Extending the hold-up time may therefore, in addition to maintaining power for momentary losses or drops, provide sufficient time for the critical components to perform the controlled shut-down procedure if the loss is more than momentary. Power amplifiers, connected to other sub PSUs, are not needed during the shut-down and hence example embodiments may involve taking energy stored via other sub PSUs for use by the primary PSU.

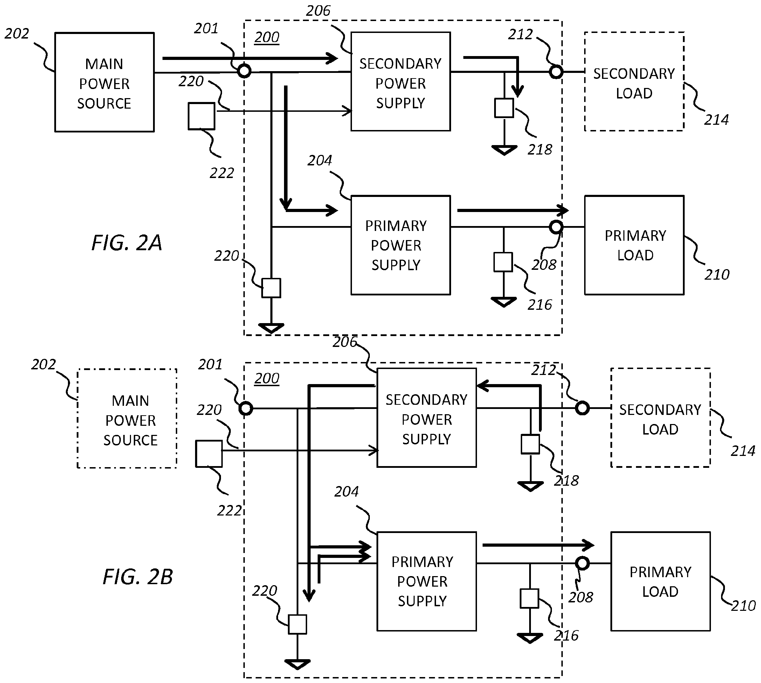

FIGS. 2A and 2B show an example overview PSU 200 according to example embodiments, in two stages of operation.

Referring first to FIG. 2A, the PSU 200 comprises an input 201 for receiving a supply of power from a main power source 202, for example the power system 108 in FIG. 1. The PSU 200 also comprises a primary power supply 204 and a secondary power supply 206. The primary power supply 204 is connected at its output to a first, or primary, output port 208 to which a primary load 210 may be connected. The secondary power supply 206 is connected at its output to a secondary output port 212 to which a secondary load 214 may be connected. The primary power supply 204 may be a regulated power supply, providing a regulated voltage to the primary load 210. The voltage provided by the primary power supply 204 may be within predefined tolerance limits. If a secondary load 214 is connected to the secondary output port 212, the same may apply for the secondary power supply 206, i.e. the secondary power supply 206 may be a regulated power supply, providing a regulated voltage to the secondary load 214. The voltage provided by the secondary power supply 206 may be within predefined tolerance limits. The tolerance limits of the voltages provided by the primary and secondary power supplies may be same or different.

The input to the primary power supply 204, from the input 201, may comprise a first energy storage module 220 for storing electrical energy. For example, the first energy storage module 220 may comprise a capacitor. One terminal of the first energy storage module 220 may be connected to the input 201 and the other terminal may be connected to a reference node, such as a ground terminal. The outputs of the primary and secondary power supplies 204, 206 may comprise respective second and third energy storage modules 216, 218 for storing electrical energy at the outputs. The second and third energy storage modules 216, 218 may be incorporated in the primary and secondary power supplies 204, 206. For example the second and third energy storage modules 216, 218 may comprise capacitors in any suitable configuration, e.g. individual capacitors, series or parallel -connected capacitors etc. One terminal of the second and third energy storage modules 216, 218 may be connected to the outputs 208, 212 of the primary and secondary power supplies 204, 206 and the other terminals may be connected to a reference node, such as a ground terminal. The reference nodes shown in FIGS. 2A and 2B may be the same reference node or may be different reference nodes.

The secondary power supply 206 may be bi-directional. That is, it may be controlled such that current may flow in both directions, i.e. from input to output in a first mode of operation (indicated in FIG. 2A) and from output to input in a second mode of operation (indicated in FIG. 2B). A control line 220 is shown extended from a controller module 222 which provides control logic, and may at least control the direction of current flow for the secondary power supply 206.

Therefore, referring first to FIG. 2A, when the main power source 202 is supplying power to the PSU 200 at a sufficient level to provide correct power to the primary load 210, some current flows through the secondary power supply 206 and charge is stored by the third energy storage module 218 at the output. The first energy storage module 220 and the second energy storage 216 may also be charged.

Referring now to FIG. 2B, when the main power source 202 is interrupted in terms of input power, as represented by the power source being shown disconnected from the rest of the circuit, example embodiments involve re-routing the charge stored on the third energy storage module 218, by changing the mode (and hence direction) of the bi-directional secondary power supply 206, to provide power to the primary power supply 204 and/or to charge the first energy storage module 220. The primary power supply 204 may take current from whichever source is more capable of supplying it, depending on the current discharge state of the first energy storage module 220 and that of the secondary power supply 206. The current can be taken from either or both. Thus, the primary power supply 204 may continue its operation to supply sufficient regulated power to the primary load 210 using discharged energy from the first energy storage module 220, which has its hold-up time extended by the additional received charge, and/or that of the secondary power supply 206.

Other example embodiments may provide any number of secondary-type power supplies 206 connected in parallel as shown, and operated in the same way to provide additional charge to the first energy storage module 220, and therefore extend the hold-up time even further.

The first energy storage module 220 may have a larger capacity than the second and third energy storage modules 216, 218.

This arrangement does not require any significant change to existing PSUs, nor additional bulky components, and therefore it may offer a convenient solution, particularly in space-limited situations. Also, there is no requirement to have secondary loads 214 actually connected to the PSU 200. In practice, many PSUs come off-the-shelf with parallel sub PSUs, and often some of these may be redundant and/or provide power to non-critical loads or systems.

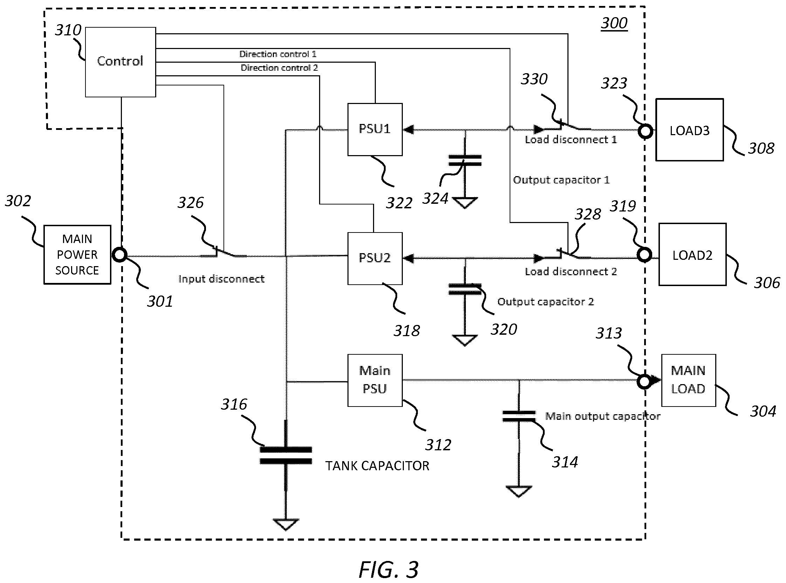

FIG. 3 is a circuit schematic of a PSU 300 according to example embodiments, which realizes the principles described above in relation to FIGS. 2A and 2B. As mentioned above, PSUs are available which comprise a plurality of parallel DC-DC converters for suppling respective loads or systems and some of these may not be used or are used for non-critical loads or systems.

Referring to FIG. 3, the PSU 300 may comprise an input 301 for receiving supply of power from a main power source 302, for example the power system 108 in FIG. 1. The PSU 300 also comprises a main power supply 312, a secondary power supply 318 and a tertiary power supply 322. The primary power supply 312 is connected at its output to a first, or primary, output port 313 to which a primary, or main load 304 may be connected. The secondary power supply 318 is connected at its output to a secondary output port 319 to which a secondary load 306 may be connected. The tertiary power supply 322 is connected at its output to a tertiary output port 323 to which a tertiary load 308 may be connected.

The primary power supply 312 may be a regulated power supply, providing a regulated voltage to the main load 304 within predefined voltage tolerance limits. If a secondary load 306 is connected to the secondary output port 319, the same may apply for the secondary power supply 318. If a tertiary load 308 is connected to the tertiary output port 323, the same may apply for the tertiary power supply 322.

The input to the primary power supply, from the input 301, may comprise a first energy storage module in the form of a capacitor (hereafter referred to as a "tank capacitor") 316 for storing electrical energy. Disposed between the input 301 and a first terminal of the tank capacitor 316 is an input disconnect switch 326. The other terminal of the tank capacitor 316 may be connected to a reference node, such as a ground terminal. The outputs of the primary, secondary and tertiary power supplies 312, 318, 322 may comprise respective first, second and third output energy storage modules in the form of capacitors 314, 320, 324 for storing electrical energy. For example first terminals of the first, second and third output capacitors 314, 320, 324 may be connected directly to the outputs of the primary, secondary and tertiary power supplies 312, 318 322 and the other terminals may be connected to a reference node, such as a ground terminal.

The secondary and tertiary power supplies 318, 322 may be bi-directional. That is, they may be controlled such that current may flow in both directions, i.e. from input to output in a first mode of operation and from output to input in a second mode of operation. The direction of current flow may be controlled by a control module 310, the operation of which will be explained later on. The control module 310 may also control whether the input disconnect switch 326 is open or closed.

Disposed between the outputs of the secondary and tertiary power supplies 318, 322 are respective load disconnect switches 328, 330. The control module 310 may also control whether the load disconnect switches 328, 330 are open or closed.

The input disconnect switch 326, and the load disconnect switches 328, 330 may be any form of electrically controllable switch, such as transistors (bipolar or field-effect transistors) or other solid-state switching components or mechanical components.

As will be seen from FIG. 3, control lines or connectors extend between the control module 310 and the secondary and tertiary power supplies 312, 318, the input disconnect switch 301 and the load disconnect switches 328, 330 to control their respective states.

In FIG. 2A, FIG. 2B, and FIG. 3 the loads have been illustrated as one module, i.e. primary load, secondary load, load3, load2, main load. Each load may comprise one load or multiple loads.

The reference nodes shown in FIG. 3 may be the same reference node or may be different reference nodes.

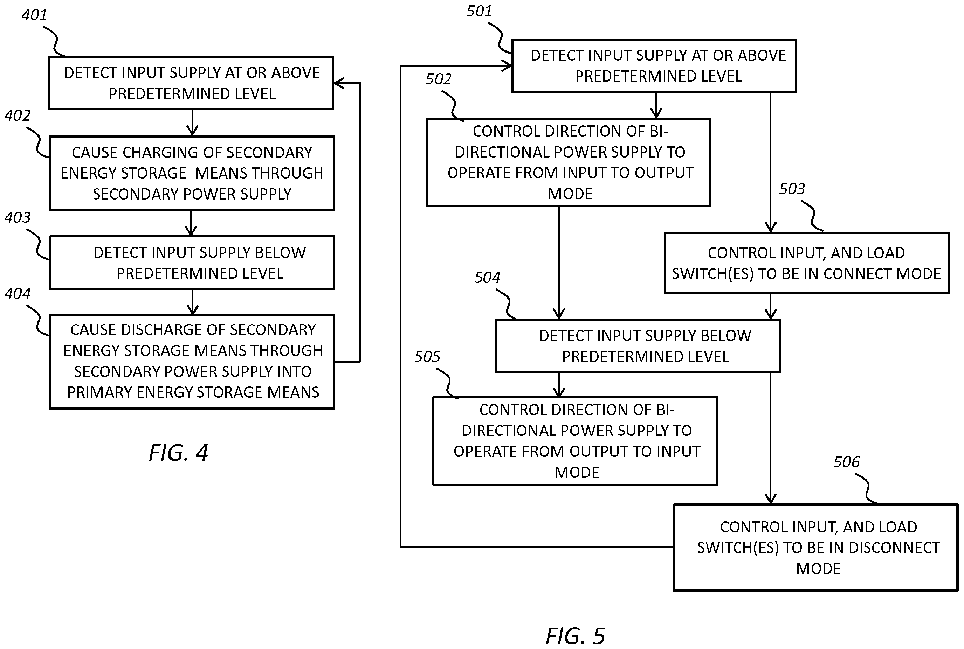

Referring now to FIG. 4, there is shown a flow diagram comprising processing operations that may be performed by the control module 310 according to some example embodiments. The operations may be performed by hardware, software or a combination thereof. The ordering of reference numerals is not necessarily indicative of the order of processing or performance.

A first operation 401 may comprise detecting the input supply voltage from the main power source 302 being at or above a predetermined level.

A second operation 402 may comprise causing charging of a secondary energy storage means 320 through the secondary power supply 318.

A third operation 403 may comprise detecting the input supply voltage being below the predetermined level.

A fourth operation 404 may comprise causing discharge of the secondary energy storage means 320 through the secondary power supply 318 and into the primary energy storage means 316.

The process may return to the first operation 401 once the input supply voltage returns.

Referring now to FIG. 5, there is shown another flow diagram comprising processing operations that may be performed by the control module 310 according to some example embodiments, with specific example to the PSU 300 shown in FIG. 3. The operations may be performed by hardware, software or a combination thereof. The ordering of reference numerals is not necessarily indicative of the order of processing or performance.

A first operation 501 may comprise detecting the input supply voltage from the main power source 302 being at or above a predetermined level.

A second operation 502 may comprise controlling the direction of the secondary (and/or tertiary) power supply 318, 322 to operate in an input to output mode.

A third operation 503, which may be performed substantially simultaneously with the second operation 502, may comprise controlling the input and load switches 326, 328, 330 to be in connect mode.

With reference to FIG. 3, this means that the secondary and/or tertiary power supplies 318, 322 operate in their conventional input to output mode whereby the output capacitors 320, 324 are charged and, if secondary and/or tertiary loads 306, 308 happen to be connected to the output ports 319, 323, then these will receive current. The main load 304 is also supplied with sufficient regulated current to operate normally and the tank capacitor 316 is also being charged.

A fourth operation 504 may comprise detecting the input supply voltage being below the predetermined level.

A fifth operation 505 may comprise controlling the direction of the secondary (and/or tertiary) power supply 318, 322 to operate in an output to input mode.

A sixth operation 506, which may be performed substantially simultaneously with the fifth operation 505, may comprise controlling the input and load switches 326, 328, 330 to be in disconnect mode.

With reference to FIG. 5, this means that the secondary and/or tertiary bi-directional power supplies 318, 322 operate in their reverse, output to input mode whereby the output capacitors 320, 324 are discharged and, if secondary and/or tertiary loads 306, 308 happen to be connected to the output ports 319, 323, then these will cease to be connected to the power supplies. The main load 304 continues to be supplied with sufficient regulated current for a period of time (the hold-up time) to operate normally from the additional charge in the tank capacitor 316 as it discharges to the main load 304.

The tank capacitor 316 may be configured to have a greater capacity than each of the output capacitors 320, 324.

As mentioned previously, in some cases, there may be no loads connected to one or more of the secondary and tertiary power supplies 318, 322. This may be because the PSU 300 may comprise multiple power supplies connected in parallel in a single proprietary unit, and only a subset is needed, possibly only one for the main, primary load. Therefore, using such a PSU 300 in the manner described makes use of otherwise wasted resources by providing the control module 310. This may minimise space and may occupy the same space as the original unit, not requiring additional and possibly bulky components. In some cases, the control module 310 may control the PSU 300 remotely, provided a suitably small receiver is placed in the PSU. The receiver may be a wireless receiver. In some cases, where there is a processor and memory already provided in the PSU, e.g. for other purposes, the amount of memory required to implement an additional control function as described herein may be possible without any further hardware. Some proprietary PSUs provide switches for other purposes and hence configuring the PSU to operate in the manner described may be achieved.

Further, even if there are loads connected to one or more of the secondary and tertiary power supplies 318, 322, if their respective loads 306, 308 are non-critical (e.g. for periodic status reporting) then they may be used for the purposes described, for example if there are no redundant power supplies. For example, if their operation is periodic, the control module 310 may detect if one or more of the secondary and/or tertiary loads is currently active or non-active, and may utilise the corresponding power supply of a non-active load to discharge harvested power from the output capacitors 320, 324 to the tank capacitor 316.

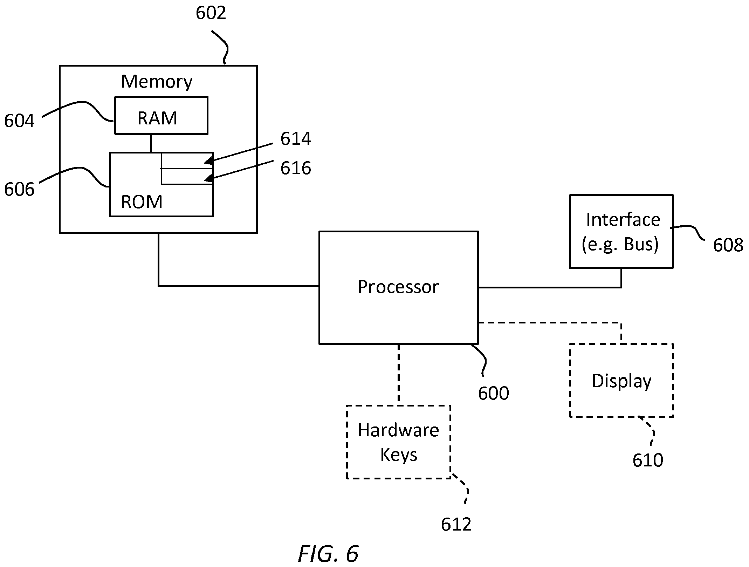

FIG. 6 is a schematic view of an apparatus which may provide the control module 310 shown in FIG. 3.

The apparatus may have a processor 600, a memory 602 closely-coupled to the processor and comprised of a random access memory RAM 604 and read only memory ROM 606. The apparatus may comprise an interface 608, and optionally a display 610 and one or more hardware keys 612. The apparatus may comprise one or more such interfaces 608 which may comprise a port or bus for connection to the various components under control of the control module 310. In some embodiments, the apparatus may communicate wirelessly with another module for controlling the various components, or with the various components themselves, in which case the interface 608 may comprise a wireless or network interface The one or more wireless or network interfaces 608 may be for connection to the internet, e.g. using WiFi or similar. The processor 600 is connected to each of the other components in order to control operation thereof.

The memory 602 may comprise a non-volatile memory, a hard disk drive (HDD) or a solid state drive (SSD). The ROM 606 of the memory stores, amongst other things, an operating system 614 and may store one or more software applications 616. The RAM 604 of the memory 602 may be used by the processor 600 for the temporary storage of data. The operating system 614 may contain code which, when executed by the processor 600, implements the operations as described above, for example in the various flow diagrams of FIGS 4 and 5. As mentioned below, the memory 602 may comprise any suitable form, and may even be implemented in the cloud.

The processor 600 may take any suitable form. For instance, the processor 600 may be a microcontroller, plural microcontrollers, a microprocessor, or plural microprocessors and the processor may comprise processor circuitry.

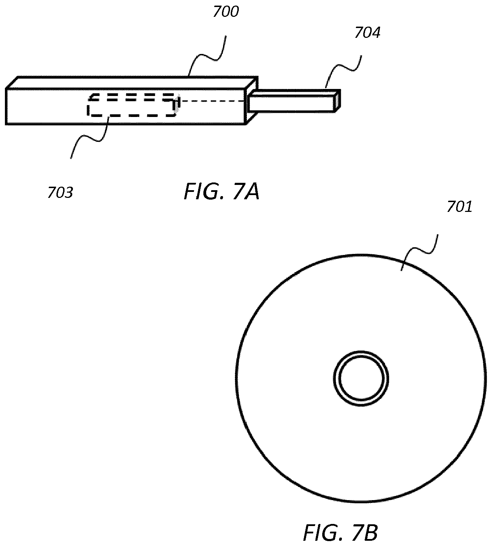

FIG. 7A and FIG. 7B show tangible non-volatile media, respectively a removable memory unit 700 and a compact disc (CD) 701, each storing computer-readable code which when run by a computer may perform methods according to example embodiments described above. The removable memory unit 700 may be a memory stick, e.g. a USB memory stick, having internal memory 703 storing the computer-readable code. The internal memory 703 may be accessed by a computer system via a connector 704. The CD 701 may be a CD-ROM or a DVD or similar. Other forms of tangible storage media may be used.

In the foregoing, any reference to "means" may refer to the means as comprising: analog circuitry, digital circuitry, a combination or analog and digital circuitry, and/or at least one processor, and at least one memory including computer program code, the at least one memory and computer program code configured to, with the at least one processor, cause the performance of the apparatus.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some example embodiments may be implemented in the cloud and utilize virtualized modules.

Example embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Apparatus comprising:
means for providing a supply voltage to a primary load from a primary energy storage means;
means for detecting an input supply voltage provided by a main power supply;
means for causing charging of a secondary energy storage means from the main power supply through a secondary power supply if the input supply voltage is at or above a predetermined level, wherein the secondary power supply is configured to operate in a first mode of operation; and
means for causing discharging of the secondary energy storage means through the secondary power supply into the primary energy storage if the input supply voltage is below the predetermined level, wherein the secondary power supply is configured to operate in a second mode of operation.

2. The apparatus of claim 1, wherein the secondary power supply is a DC-DC power converter.

3. The apparatus of claim 2, wherein the direction of energy flow is determined by a controlling means which, in the first mode of operation, directs energy in a first direction from the input to the output to charge the secondary energy storage means and, in the second mode of operation, directs energy in a second direction from the output to the input to cause discharge energy from the secondary energy storage means to charge the primary energy storage means.

4. The apparatus of any preceding claim, further comprising a first switching means connected between the secondary energy storage means and a secondary load connected to an output of the secondary power supply, and further comprising controlling means configured, by control of the first switching means, to disconnect the secondary load from the secondary energy storage means when the input supply is below the predetermined level in the second mode of operation.

5. The apparatus of any preceding claim, further comprising a second switching means connected between the main power supply and inputs of the voltage supply means to the primary load and the secondary power supply, and further comprising controlling means configured, by control of the switching means, to disconnect the main power supply from the first and second inputs means when the input supply is below the predetermined level in the second mode of operation.

6. The apparatus of any preceding claim, wherein the primary energy storage means is connected directly to the main power supply.

7. The apparatus of any preceding claim, wherein the primary energy storage means has greater storage capacity than the secondary energy storage means.

8. The apparatus of any preceding claim, wherein the primary energy storage means and the secondary energy storage means are capacitors.

9. The apparatus of any preceding claim, comprising a plurality of secondary, additional power supply means, each for connection to respective secondary loads, each second input being connected to the main power supply and the primary energy storage means and having respective secondary energy storage means connected between their outputs and a reference node, and further comprising controlling means configured to cause charging of each secondary energy storage means when the input voltage supply is at or above the predetermined level in the first mode of operation and to cause discharging, through the respective power supplies, into the first energy storage means, when the input supply is below the predetermined level in the second mode of operation.

10. The apparatus of any preceding claim, wherein the power supplies are connected in parallel to one another.

11. A method, comprising:
providing a supply voltage to a primary load from a primary energy storage means;
detecting an input supply voltage provided by a main power supply;
causing charging of a secondary energy storage from the main power supply through a secondary power supply, if the input supply voltage is at or above a predetermined level, wherein the secondary power supply is configured to operate in a first mode of operation; and
causing discharging of the secondary energy storage through the secondary power supply into the primary energy storage, if the input supply voltage is below the predetermined level, wherein the secondary power supply is configured to operate in a second mode of operation.

12. The method of claim 11, wherein the secondary power supply is a bi-directional DC-DC power converter, and the method comprises, in the first mode of operation, directing energy in a first direction from the input to the output to charge the secondary energy storage means and, in the second mode of operation, directing energy in a second direction from the output to the input to cause discharged energy from the secondary energy storage means to charge the primary energy storage means.

13. The method of claim 11 or claim 12, further comprising controlling a first switching means between the secondary energy storage means and a secondary load to disconnect the secondary load from the secondary energy storage means when the input supply voltage is below the predetermined level in the second mode of operation.

14. The method of any of claims 11 to 13, further comprising controlling a second switching means connected between the main power supply and inputs of the voltage supply means to the primary load and the secondary power supply, and further comprising controlling means for disconnecting the main power supply from the first and second inputs means when the input supply is below the predetermined level in the second mode of operation.

15. A computer program product comprising at least one non-transitory computer-readable storage medium having computer-executable program code portions stored therein, the computer-executable program code portions comprising program code instructions for:
providing a supply voltage to a primary load from a primary energy storage means;
detecting an input supply voltage provided by a main power supply;
causing charging of a secondary energy storage from the main power supply through a secondary power supply, if the input supply voltage is at or above a predetermined level, wherein the secondary power supply is configured to operate in a first mode of operation; and
causing discharging of the secondary energy storage through the secondary power supply into the primary energy storage, if the input supply voltage is below the predetermined level, wherein the secondary power supply is configured to operate in a second mode of operation.
